# EUROPÄISCHE PATENTSCHRIFT

(11) **EP 2 221 261 B1**
(45) Veröffentlichungstag und Bekanntmachung des Hinweises auf die Patenterteilung: **18.09.2013**
(21) Anmeldenummer: 10152117.7
(22) Anmeldetag: 29.01.2010
(51) Int. Cl.: B65G 51/03, B65G 47/256

(54) **Vorrichtung zum Transport von Vorformlingen**
Device for conveying preforms
Dispositif destiné au transport de préformes

(30) Priorität: 20.02.2009 DE 102009009866
(43) Veröffentlichungstag der Anmeldung: 25.08.2010
(73) Patentinhaber: Krones AG, 93073 Neutraubling (DE)
(72) Erfinder: Geltinger, Florian, 84088 Neufahrn (DE)
(74) Vertreter: Reichert, Werner Franz

(56) Entgegenhaltungen:
- FR-A1- 2 806 395
- FR-A1- 2 807 414
- FR-A1- 2 821 834
- FR-A1- 2 864 050
- FR-A1- 2 911 587
- US-A- 5 299 889
- US-B1- 7 322 458

## Beschreibung

Die vorliegende Erfindung betrifft eine Vorrichtung zum Transport von Vorformlingen. Bevorzugt werden die Vorformlinge einer Blasmaschine zum Herstellen von Kunststoffbehältern zugeführt.

In der deutschen Offenlegungsschrift DE 10 2005 048 358 A1 wird eine Vorrichtung beschrieben, in welcher der vorzugsweise horizontale Transport der Vorformlinge durch eine Gasströmung und die Sortierung unter Verwendung eines drehbeweglichen Rotors sowie ortsfest angeordneter Führungsschienen erfolgt. Der Transport der Vorformlinge erfolgt zum Beispiel durch das Anblasen der Vorformlinge im Bereich der Mündung oberhalb des Stützringes, wobei die Vorformlinge auf einem Stützelement bewegt werden. Die Gasströmung wird durch die Ausströmöffnungen in die Fördereinrichtung eingebracht. Die Sortierung der Vorformlinge vor der Fördereinrichtung erfolgt durch die Nutzung der Zentrifugalkraft. Die Vorformlinge werden zentral auf die Sortiereinrichtung aufgegeben. Auf dem drehbeweglichen Rotor bewegen sie sich zu den Rändern, wobei sie durch eine erste Führungsschiene aufgehalten und durch den Durchlass bewegt werden. Nach dem Verlassen des Zentralbereiches werden die Vorformlinge in Richtung der zweiten Führungsschiene geleitet. Diese Führungsschiene ist soweit erhöht, dass der Körper der Vorformlinge zwischen die Führungsschiene und den Rotor passt. Durch den Randabstand ist es nicht möglich, dass die Vorformlinge kippen. Die Drehbewegung des Rotors transportiert die Vorformlinge zum Ausgabebereich, wo sie zum Beispiel an die Fördereinrichtung übergeben werden.

Die europäische Patentanmeldung EP 0 452 857 A1 offenbart eine Vorrichtung zum Transportieren und Ausrichten von Vorformlingen unter Verwendung von Bändern mit einem runden Querschnitt. Die Bänder sind aus einem elastischen Material hergestellt. Dadurch ist möglich, in einem der Dehnbarkeit des Materials entsprechenden Bereich, Vorformligen mit verschieden Durchmessern zu transportieren.

Das in der französische Offenlegungsschrift FR 2 556 273 A1 beschriebene Verfahren betrifft die Benutzung eines Rollen- oder Walzenförderer, der Vorformlinge ausrichtet und zu einer Weiterverarbeitungsmaschine transportiert. Die Vorformlinge werden von einem Förderband in den Walzenförderer transportiert. Die Ausrichtung erfolgt durch die zwei gegenläufigen Walzen, die die Vorformlinge nach oben bewegen, so dass sie nicht eingezogen werden. Die Walzen sind so positioniert, dass die Vorformlinge an dem Tragring gehalten werden.

Die deutsche Übersetzung der europäischen Patentschrift DE 601 18 772 T2 offenbart ein System zum Gleichrichten und Aufstellen von Vorformlingen, wobei das System zum Beispiel dazu verwendet wird, Blasmaschinen zu beschicken. Bei diesem System werden die Vorformlinge durch zwei gegenläufig angetriebene Walzen positioniert und durch die Neigung der Walzen transportiert. Durch die Drehbewegung der Walzen werden die Vorformlinge mit dem geschlossenen Ende nach unten positioniert, wobei der Ring ein Herabfallen verhindert. Vorformlinge, die auf den in den Walzen befindlichen Vorformlingen liegen, werden durch zwei mit flexiblen Schaufeln versehenen Auswurfräder entfernt und einem Rücklaufförderer zugeführt, welcher sie wieder in den Lagerbehälter befördert. Bei einem weitern Ausführungsbeispiel werden die Vorformlinge durch ein Auswurfrad entfernt, welches quer zur Transportrichtung angeordnet ist.

Die deutsche Übersetzung der europäischen Patentschrift DE 60 2004 006 164 T2 offenbart eine Weiterentwicklung des Standes der Technik der Druckschrift DE 601 18 772 T2. Bei diesem System werden die falsch positionierten Vorformlinge durch ein Rad ausgestoßen. Ein weiterer Unterschied zur Druckschrift DE 601 18 772 T2 ist, dass die Vorformlinge in einen zusätzlichen Behälter zur Wiedergewinnung gesammelt und nicht in den Behälter zum Lagern zurückgeführt werden.

Die internationale Patentanmeldung WO 2005/070793 A1 beschreibt eine Weiterentwicklung der Druckschriften DE 601 18 772 T2 und DE 60 2004 006 164 T2. Bei dem beschriebenen System werden die falsch positionierten Vorformlinge durch ein Rad ausgestoßen. Der Ausstoß der Vorformlinge und deren Sammlung erfolgt analog zur Druckschrift DE 60 2004 006 164 T2, wobei die Vorformlinge in einem zusätzlichen Behälter zur Wiedergewinnung gesammelt werden. Zusätzlich zu der bekannten Einheit ist eine zusätzliche Einheit vorhanden, die Vorformlinge ausstößt, die in Längsrichtung auf dem Transportband liegen. Mit einer Sensoreinheit können zusätzlich Vorformlinge erkannt werden, die ineinander stecken. Das Entfernen der Vorformlinge erfolgt durch das kurzfristige Vergrößern des Abstandes zwischen den abwärts gerichteten Führungsschienen, auf welchen die Vorformlinge zur Blasmaschine laufen. Die Vergrößerung des Abstandes erfolgt durch ein einseitiges Zurückziehen von zumindest einem Teil der Führungsschiene. Hierdurch fällt der falsche oder falsch liegende Vorformling nach unten in einen zusätzlichen Behälter.

Die französische Offenlegungsschrift FR 2 911 587 offenbart eine Vorrichtung zum Transport von Vorformlingen gemäß dem Oberbegriff des Anspruchs 1.

Der Erfindung liegt die Aufgabe zugrunde, eine wartungsfreundliche, nicht störungsanfällige und auf unterschiedliche Vorformlingtypen leicht anpassbare Vorrichtung zum Transport der Vorformlinge bereit zu stellen.

Diese Aufgabe wird gelöst durch eine Vorrichtung mit den Merkmalen des Anspruchs 1.

Die erfindungsgemäße Vorrichtung zum Transport von Vorformlingen umfasst mindestens einen Horizontalförderer für den Transport der Vorformlinge in eine Weiterverarbeitungsmaschine. Der Transport der Vorformlinge wird über einen von dem Horizontalförderer erzeugten Gasstrom realisiert. Für die Führung der Vorformlinge besitzt der Horizontalförderer zwei beabstandet, gegenüberliegende Führungsleisten. Der Abstand zwischen den Führungsleisten ist veränderlich einstellbar.

Über der horizontalen Sortiereinrichtung und/oder über dem Horizontalförderer, ist entlang einer Mittelinie mindestens ein Sicherungselement angebracht. Mit dem Sicherungselement wird verhindert, dass die Vorformlinge ungewollt aus der horizontalen Sortiereinrichtung und/oder aus dem Horizontalförderer ausgetragen werden. Das an der horizontalen Sortiereinrichtung und/oder an dem Horizontalförderer angebrachte Sicherungselement ist in seiner Position variabel einstellbar.

Dadurch kann man das Sicherungselement auf die unterschiedlichen Größen der Vorformlinge, sowie auf eine erhöhte Transportgeschwindigkeit der Vorformlinge durch den Gasstrom einstellen. Je nach Größe der verwendeten Vorformlinge wird das Sicherungselement näher an die Vorformlinge herangebracht oder weiter von ihnen entfernt.

Bei dem Horizontalförderer sind unterhalb und/oder oberhalb der Führungsleisten vorzugsweise eine Vielzahl von Transportdüsen zum Erzeugen des Gasstromes angeordnet. Die Transportdüsen sind so ausgerichtet, dass sie den Vorformling in Transportrichtung vorwärts bewegen. Durch das Beaufschlagen des Vorformlings mit dem Gasstrom wird dieser leicht in Transportrichtung geneigt. Durch die zusätzliche Anordnung von Transportdüsen, oberhalb der Führungsleisten, werden die Vorformlinge stärker beschleunigt, als wenn die Transportdüsen nur unterhalb der Führungsleisten angebracht sind. Durch diese stärkere Beschleunigung werden die Lücken zwischen den einzelnen Vorformlingen reduziert, so dass die lückenlose Zuführung zu einer Weiterverarbeitungsmaschine sichergestellt ist.

Obwohl in der nachfolgenden Beschreibung die Druckversorgung der Transportdüsen durch Druckkanäle realisiert ist, soll dies nicht als eine Beschränkung der Erfindung aufgefasst werden. Es ist für einen Fachmann selbstverständlich, dass auch eine individuelle Versorgung der Transportdüsen mit Druckluft möglich ist. Wie in der nachfolgenden Beschreibung zu sehen ist, sind die Druckkanäle unterhalb und/oder oberhalb der Führungsleisten paarweise, gegenüberliegend angeordnet.

Zwischen dem Horizontalförderer und der Weiterverarbeitungsmaschine befindet sich vorzugsweise eine antriebslose Förderstrecke. Diese Förderstrecke ist notwendig um die Vorformlinge lückenlos an die Eintakteinheit einer Blasmaschine zu übergeben. Die antriebslose Förderstrecke sollte so kurz wie möglich sein. Je kürzer die antriebslose Förderstrecke ist, desto weniger Staudruck muss durch den Horizontalfördere aufgebracht werden. Dieser Staudruck wird bei dem erfindungsgemäßen Horizontalförderer durch das Zusammenwirken der zusätzlichen Transportdüsen oberhalb der Führungsleisten und der Transportdüsen unterhalb der Führungsleisten erzeugt.

Dem Horizontalförderer ist erfindungsgemäß in Transportrichtung eine horizontale Sortiereinrichtung vorgeschaltet. Bei der horizontalen Sortiereinheit werden die Vorformlinge dadurch aussortiert, dass der Abstand der Führungsleisten derart vergrößert wird, dass die Vorformlinge nach unten aus der horizontalen Sortiereinheit fallen.

Unterhalb der horizontalen Sortiereinrichtung ist mindestens eine schiefe Ebene angebracht, mit der die aussortierten Vorformlinge mindestens einer Rückführeinrichtung und/oder mindestens einer Sammeleinrichtung zugeführt werden.

Die Vorformlinge werden ebenfalls bei der horizontalen Sortiereinrichtung mit einem Gasstrom transportiert. Der Gasstrom wird lediglich durch eine Vielzahl von Transportdüsen unterhalb der Führungsleisten der horizontalen Sortiereinrichtung erzeugt.

Die Druckversorgung der Transportdüsen wird über Druckkanäle realisiert, die unterhalb der Führungsleisten paarweise, gegenüberliegend angeordnet sind.

Dadurch, dass die Führungsleisten des Horizontalförderers und der horizontalen Sortiereinheit variabel in ihrem Abstand einstellbar sind, ist es möglich mit der Vorrichtung zum Transport von Vorformlingen, verschiedene Vorformlingtypen zu transportieren.

Zur Ausrichtung und Positionierung der Vorformlinge ist der horizontalen Sortiereinrichtung in Transportrichtung ein Rollensortierer vorgeschaltet. Der Rollensortierer besteht aus paarweise angeordneten, gegenläufig angetriebenen Rollen.

Unterhalb der Rollen des Rollensortierers sind Ausblasdüsen angeordnet, mit denen die Vorformlinge aus dem Rollensortierer ausgesondert werden können. Durch das Ausblasen mittels der Ausblasdüsen werden die Vorformlinge nach oben aus dem Rollensortierer ausgetragen. Nach dem Austragen werden die Vorformlinge mindestens einer Rückführeinrichtung und/oder mindestens einer Sammeleinrichtung zugeführt.

Der horizontalen Sortiereinrichtung und dem Rollensortierer ist jeweils mindestens eine Sensoreinrichtung zugeordnet, mit der die Position und/oder die Qualität der Vorformlinge detektiert wird. Diese Sensoreinrichtungen können entweder mechanische Einrichtungen zur Bestimmung der Lage der Vorformlinge oder optischen Einrichtungen sein. Mit den optischen Einrichtungen können sowohl die Position der Vorformlinge als auch qualitative Merkmale erfasst werden. Zu den möglichen qualitativen Merkmalen gehört zum Beispiel die Farbe des Vorformlings. Weist ein Vorformling die falschen Farbe auf, so würde er von der optischen Einrichtung erkannt und entweder durch Ausblasen aus dem Rollensortierer oder durch Vergrößern des Abstandes zwischen den Führungsleisten aus der horizontalen Sortiereinheit ausgesondert.

In einer bevorzugten Ausführungsform besteht die mindestens eine Rückführeinrichtung, die der horizontalen Sortiereinheit und/oder dem Rollensortierer zugeordnet ist aus mindestens einem Rückführband. Mit diesem Rückführband werden die aussortierten Vorformlinge wieder der Vorrichtung zum Transport der Vorformlinge zurückgeführt. Diese Art der Rückführung bietet sich vor Allem für Vorformlinge an, die falsch positioniert oder ineinander verkeilt waren.

Eine weitere Möglichkeit die aus der horizontalen Sortiereinheit und/oder dem Rollensortierer aussortierten Vorformlinge aufzufangen, ist die Verwendung von mindestens einer Sammeleinrichtung. Eine Sammeleinrichtung kann zum Beispiel ein Container sein, welcher unter der horizontalen Sortiereinrichtung und/oder unter dem Rollensortierer platziert wird. Diese Art des Auffangens der Vorformlinge ist sinnvoll, wenn Beispielsweise Vorformlinge aussortiert wurden, die den qualitativen Ansprüchen nicht genügen.

Im Folgenden sollen Ausführungsbeispiele die erfindungsgemäße Vorrichtung zum Transport von Vorformlingen und deren Vorteile anhand der beigefügten Figuren näher erläutern.
Figur 1 zeigt schematisch einen bekannten Vorformling.
Figur 2a zeigt schematisch den Aufbau der Vorrichtung zum Transport von Vorformlingen und eine zugeordnete Rückführeinrichtung.
Figur 2b zeigt schematisch den Aufbau der Vorrichtung zum Transport von Vorformlingen und mehrere zugeordnete Sammeleinrichtungen.
Figur 3 zeigt schematisch den Aufbau des Rollensortierers.
Figur 4 zeigt schematisch die Ansicht des Rollensortierers entlang der mit A-A gekennzeichneten Schnittlinie aus Figur 3.
Figur 5 zeigt schematisch den Aufbau der horizontalen Sortiereinrichtung.
Figur 6a zeigt schematisch die Ansicht der horizontalen Sortiereinrichtung entlang der mit B-B gekennzeichneten Schnittlinie aus Figur 5.
Figur 6b zeigt schematisch eine Seitenansicht der horizontalen Sortiereinrichtung.
Figur 7 zeigt schematisch die Ansicht der horizontalen Sortiereinrichtung entlang der mit C-C gekennzeichneten Schnittlinie aus Figur 5.
Figur 8 zeigt schematisch den Aufbau des Horizontalförderers.
Figur 9a schematisch die Ansicht des Horizontalförderers entlang der mit D-D gekennzeichneten Schnittlinie aus Figur 8.
Figur 9b zeigt schematisch eine Seitenansicht des Horizontalförderers.
Figur 10 zeigt schematisch die Übergabe der Vorformlinge vom Horizontalförderer an die Eintakteineheit vor einer Weiterverarbeitungseinheit.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

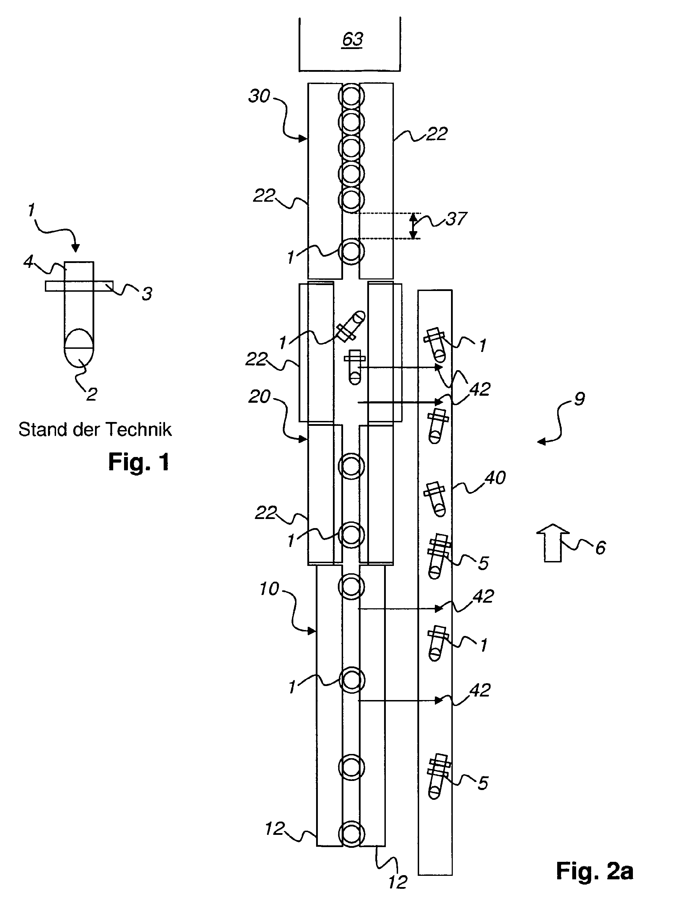

Die **Figur 1** zeigt schematisch einen bekannten Vorformling 1. Dieser Vorformling 1 besteht zum einen aus dem Körper 2, aus welchen später der Flüssigkeitsbehälter hergestellt wird. Weiterhin aus dem Haltering 3, an dem in der Produktion der Vorformling 1 geführt und in der Verarbeitungsmaschine gehalten wird. Ebenso umfasst der Vorformling 1 einen Hals 4, an welchem das Gewinde ausgebildet ist, das später den Verschluss des Flüssigkeitsbehälters aufnimmt.

Die **Figur 2a** zeigt schematisch den Aufbau der Vorrichtung 9 zum Transport von Vorformlingen 1 und eine zugeordnete Rückführeinrichtung 40. Es ist ein Rollensortierer 10 dargestellt, mit dem die Vorformlinge 1 ausgerichtet und zu einer horizontalen Sortiereinrichtung 20 transportiert werden. In dieser horizontalen Sortiereinrichtung 20 werden die Vorformlinge 1 nach verschiedenen Kriterien aussortiert. Alle Vorformlinge 1 die keine Mängel und/oder falsche Positionen in der horizontalen Sortiereinrichtung 20 aufweisen, werden an einen Horizontalförderer 30 weitertransportiert. Mit dem Horizontalförderer 30 werden die Lücken 37 zwischen den Vorformlingen 1 verringert. Durch die Verringerung der Lücken 37, ist eine kontinuierliche Zuführung der Vorformlinge 1 zu der Weiterverarbeitungseinheit 63 gewährleistet. Alle Vorformlinge 1, die durch den Rollensortierer 10 oder die horizontale Sortiereinheit 20 ausgesondert wurden, werden mit der Rückführeinrichtung 40 wieder der Vorrichtung 9 zum Transport von Vorformlingen 1 zugeführt.

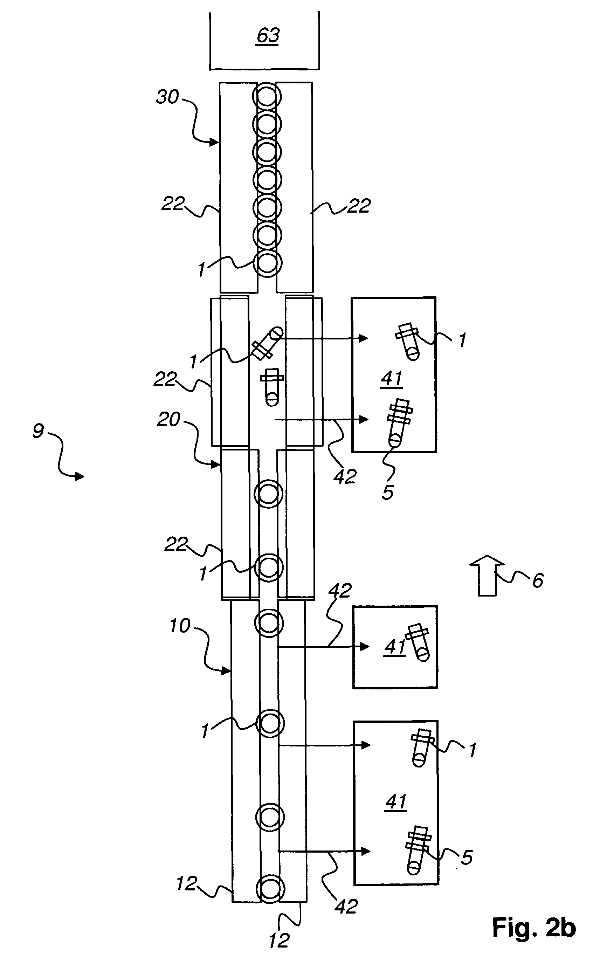

Die **Figur 2b** zeigt schematisch den Aufbau der Vorrichtung 9 zum Transport von Vorformlingen 1 und mehrere ihr zugeordnete Sammeleinrichtungen 41. In diesem Ausführungsbeispiel ist dargestellt, wie das Auffangen der aussortierten Vorformlinge 1 mit einem System aus Sammeleinrichtungen 41 realisiert werden kann. Die Vorformlinge 1 werden von dem Rollensortierer 10 und/oder von der horizontalen Sortiereinrichtung 20 aussortiert und in Richtung 42 in die Sammeleinrichtungen 41 überführt.

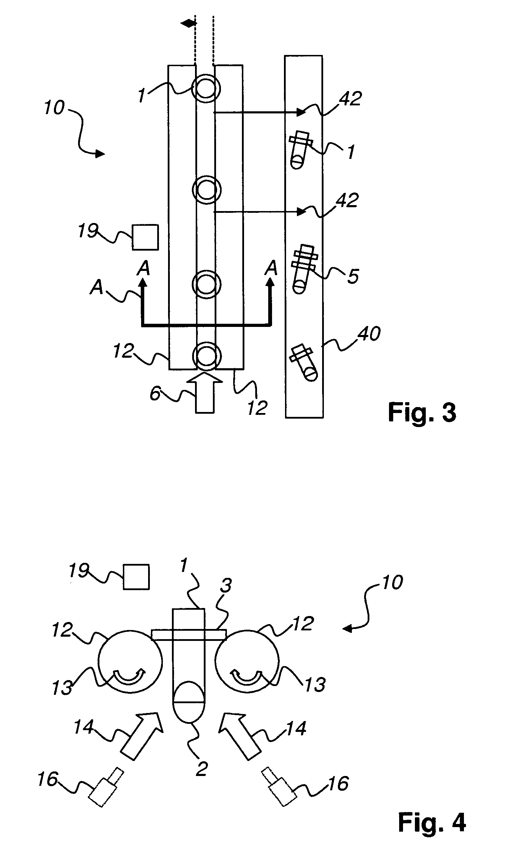

Die **Figur 3** zeigt schematisch den Aufbau des Rollensortierers 10. Die Vorformlinge 1 werden durch gegenläufiges Drehen der Rollen 12 ausrichtet und in Transportrichtung 6 transportiert. Eine weitere Aufgabe des Rollensortierers 10 besteht darin, verkeilte Vorformlinge 5 und/oder Vorformlinge 1, die nicht den Qualitätsansprüchen genügen, auszuschleusen und an die Rückführeinrichtung 40 zu übergeben. Mit der Sensoreinrichtung 19 ist es möglich die Position, Lage und/oder die Qualität der Vorformlinge 1 zu bestimmen.

Die **Figur 4** zeigt schematisch den Aufbau des Rollensortierers 10 entlang der Schnittlinie A-A aus Figur 3. Der Rollensortierer umfasst zwei Rollen 12, mit denen die Vorformlinge 1 transportiert und ausgerichtet werden. Die Rollen 12, drehen sich gegenläufig in der entsprechenden Drehrichtung 13. Durch das Drehen der Rollen 12 in der dargestellten Drehrichtung 13 wird ein Einziehen der Vorformlinge 1 in den Rollensortierer 10 vermieden. Die Ausrichtung der Vorformlinge 1 erfolgt ebenfalls durch die gegenläufige Drehung der Rollen 12. Die Vorformlinge 1 werden an dem Haltering 3 von den Rollen 12 gehalten und pendeln mit dem Körper 2 zwischen den Rollen 12. Mit den Ausblasdüsen 16 wird ein Gasstrom 14 zum Ausblasen erzeugt, mit dem zum Beispiel fehlerhafte Vorformlinge 1 aus dem Rollensortierer 10 herausgeblasen werden. Die Steuerung der Ausblasdüsen 16 erfolgt über die Sensoreinrichtung 19. Wird von der Sensoreinrichtung 19 ein fehlerhafter oder falsch positionierter Vorformling 1 erkannt, so wird ein Signal an die Ausblasdüsen 16 übermittelt und der entsprechende Vorformling 1 wird ausgeblasen. Diese Vorformlinge 1 gelangen zu der Rückfüreinrichtung 40 (siehe Figur 3).

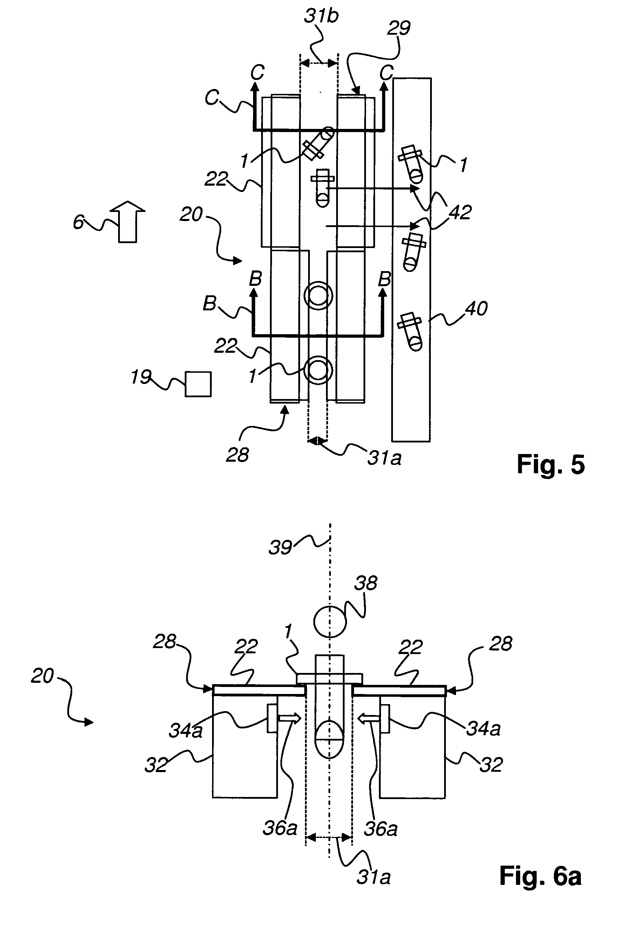

Die **Figur 5** zeigt schematisch den Aufbau der horizontalen Sortiereinrichtung 20. In der horizontalen Sortiereinrichtung 20 werden die Vorformlinge 1 mittels Führungsleisten 22 in Transportrichtung 6 transportiert. Die Vorschubkraft, die die Vorformlinge 1 transportiert wird durch einen Gasstrom 36 (siehe Figur 6a) erzeugt. In der geschlossenen Stellung 28 der Führungsleisten 22 werden die Vorformlinge 1 transportiert. Wenn die Führungsleisten 22 in die geöffnete Stellung 29 gebracht werden, werden die Vorformlinge 1, die sich auf den Führungsleisten 22 befinden entlang der Richtung 42 aussortiert und an die Rückführeinrichtung 40 übergeben. Die Stellung der Führungsleisten 22 ist von den Informationen, die von der Sensoreinrichtung 19 übermittelt werden abhängig. Ermittelt die Sensoreinrichtung 19 einen Vorformling 1, der falsch Positioniert ist und/oder nicht der gewünschten Qualität entspricht, so werden die Führungsleisten 22 derart geöffnet, dass der Vorformling 1 nach unten aus der horizontalen Sortiereinrichtung 20 herausfällt. Die Führungsleisten 22 können in ihrem Abstand zueinander eingestellt werden. Es lässt sich folglich ein geringer Abstand 31a einstellen, der derart bemessen ist, dass die Vorformlinge 1 durch die beabstandeten Führungsleisten 22 transportiert werden können. In einer anderen Einstellung der Führungsleisten 22 lässt sich ein größerer Abstand 31b einstellen, der derart bemessen ist, dass die Vorformlinge 1 nicht mehr an dem Haltering 3 geführt werden und nach unten aus der horizontalen Sortiereinrichtung 20 herausfallen. Im Bereich der horizontalen Sortiereinrichtung 20, in dem der geringe Abstand 31a durch die geschlossene Stellung 28 der Führungsleisten 22 eingestellt ist, werden die Vorformlinge 1 an ihrem Haltering 3 gehalten und transportiert. Wird in der horizontalen Sortiereinrichtung 22 der größere Abstand 31b anhand der geöffneten Stellung 29 von zumindest einem Teilabschnitt der gegenüberliegenden Führungsleisten 22 eingestellt, fallen die Vorformlinge 1 aus der horizontalen Sortiereinrichtung 20 heraus, da sie nicht mehr an dem Haltering 3 geführt werden.

Die **Figur 6a** zeigt schematisch den Aufbau der horizontalen Sortiereinrichtung 20 entlang der Schnittlinie B-B aus Figur 5. In diesem Ausführungsbeispiel befinden sich die Führungsleisten 22 in der geschlossenen Stellung 28. In dieser Stellung 28 können die Vorformlinge 1, aufgrund des geringen Abstandes 31a zwischen den Führungsleisten 22, mit der horizontalen Sortiereinrichtung 20 transportiert werden. Der Transport ist dadurch möglich, weil die Halteringe 3 der Vorformlinge 1 auf den Führungsleisten 22 aufliegen. Über die in den Druckkanälen 32 befindlichen Transportdüsen 34a wird ein Gasstrom 36a zugeführt, mit dem die Vorformlinge 1 transportiert werden. Oberhalb der zu transportierenden Vorformlinge 1 ist entlang einer Mittelinie 39 mindestens ein Sicherungselement 38 angebracht. Dieses Sicherungselement 38 verhindert, dass die Vorformlinge 1 ungewollt aus der horizontalen Sortiereinrichtung 20 ausge-tragen werden.

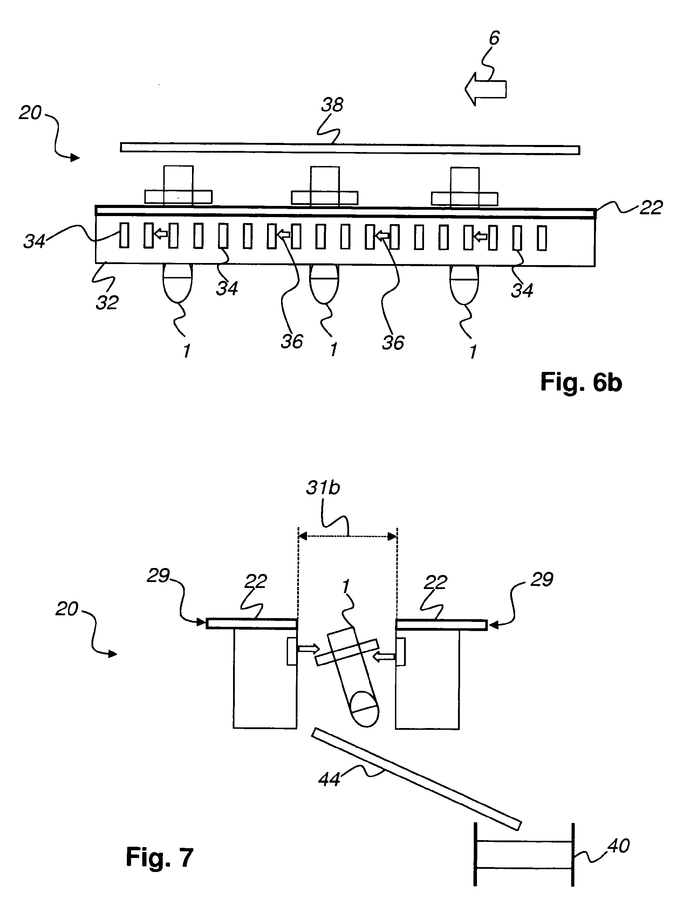

Die **Figur 6b** zeigt schematisch eine Seitenansicht der horizontalen Sortiereinrichtung 20. Die Vorformlinge 1 werden auf den Führungsleisten 22 in Transportrichtung 6 transportiert. Die Transportdüsen 34a, die in den Druckkanälen 32 angeordnet sind, erzeugen einen Gasstrom 36a, der die Vorformlinge 1 bewegt. Durch das Sicherungselement 38 wird vermieden, dass die Vorformlinge 1 ungewollt aus der horizontalen Sortiereinrichtung 20 herausgehoben werden.

Die **Figur 7** zeigt schematisch den Aufbau der horizontalen Sortiereinrichtung 20 entlang der Schnittlinie C-C aus Figur 5. Die Führungsleisten 22 befinden sich in der geöffneten Stellung 29. In dieser Stellung 29 können die Vorformlinge 1 aufgrund des größeren Abstandes 31b zwischen den Führungsleisten 22 nicht mehr mit der horizontalen Sortiereinrichtung 20 transportiert werden. Dadurch, dass der größere Abstand 31b zwischen den Führungsleisten eingestellt ist, fallen die Vorformlinge 1 herunter und werden über die schiefe Ebene 44 der Rückführeinrichtung 40 zugeführt.

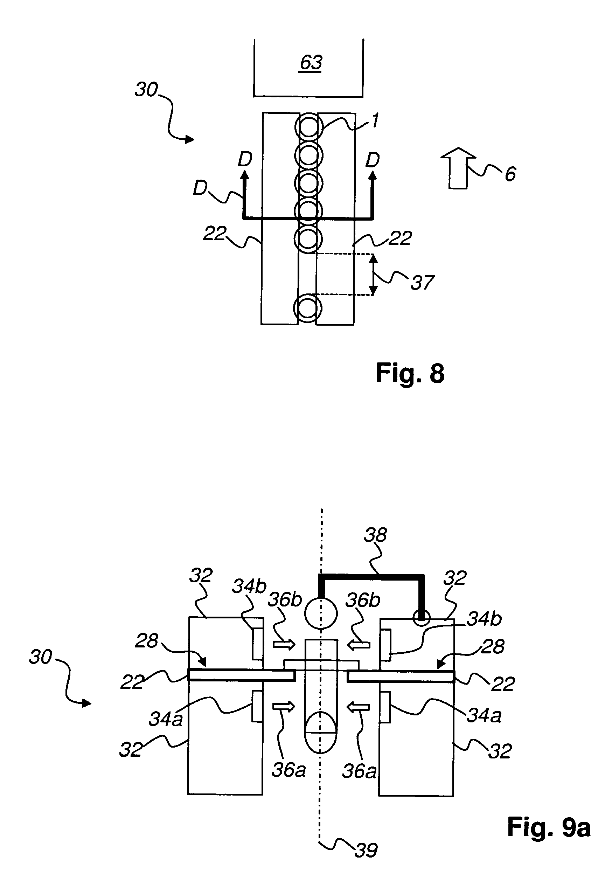

Die **Figur 8** zeigt schematisch den Aufbau des Horizontalförderers 30. Mit dem Horizontalförderer 30 werden die Vorfirmlinge 1 in Transportrichtung 6 mittels Führungsleistenleisten 22 und dem Gasstrom 36a (siehe Figur 9a) transportiert. Zusätzlich werden mit dem Horizontalförderer 30 die Lücken 37 zwischen den Vorformlingen 1 verringert, so dass eine lückenlose Zuführung zu einer Weiterverarbeitungseinheit 63 gewährleistet ist.

Die **Figur 9a** zeigt schematisch den Aufbau des Horizontalförderers 30 entlang der Schnittlinie D-D aus Figur 8. Die Führungsleisten 22 befinden sich in der geschlossenen Stellung 28. Durch die Transportdüsen 34a, die in den Druckkanäle 32 ausgebildet sind, die unterhalb der Führungsleisten 22 angeordnet sind, wird ein Gasstrom 36a erzeugt, mit dem die Vorformlinge 1 bewegt werden. Ferner sind zusätzliche Druckkanäle 32 oberhalb der Führungsleisten 22 angeordnet. In diesen Druckkanälen 32 sind ebenfalls Transportdüsen 34b ausgebildet, durch die ein zusätzlicher Gasstrom 36b erzeugt wird. Dieser zusätzliche Gasstrom 36b wirkt mit dem Gasstrom 36a zusammen. Durch dieses Zusammenwirken werden die Vorformlinge 1 in dem Horizontalförderer 30 schneller bewegt als in der horizontalen Sortiereinrichtung 20. Der zusätzliche Gasstrom 36b wird derart eingestellt, dass die Lücken 37 zwischen den Vorformlingen 1 verringert werden, so dass eine lückenlose Zuführung zu einer Weiterverarbeitungseinheit 63 gewährleistet ist. Oberhalb der zu transportierenden Vorformlinge 1 ist, entlang einer Mittelinie 39, mindestens ein Sicherungselement 38 angebracht. Dieses Sicherungselement 38 verhindert, dass die Vorformlinge 1 ungewollt aus dem Horizontalförderer 30 ausgetragen werden.

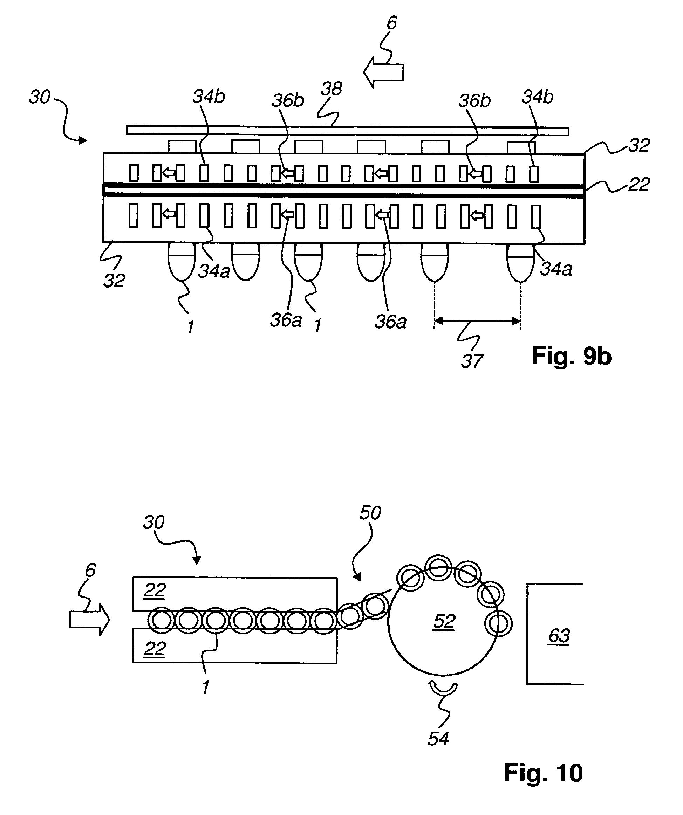

Die **Figur 9b** zeigt schematisch eine Seitenansicht des Horizontalförderers 30. Die Vorformlinge 1 werden auf den Führungsleisten 22 in Transportrichtung 6 transportiert. Die Transportdüsen 34a, die in dem Druckkanal 32 unterhalb der Führungsleisten 22 angeordnet sind, erzeugen einen Gasstrom 36a, der die Vorformlinge 1 bewegt. Oberhalb der Führungsleisten 22 ist ein weiterer Druckkanal 32 mit zusätzlichen Transportdüsen 34b angebracht, über den ein zusätzlicher Gasstrom 36b erzeugt wird. Mit dem zusätzlichen Gasstrom 36b werden die Vorformlinge 1 dichter zusammen geschoben, so dass die Lücke 37 geschlossen wird. Durch das Sicherungselement 38 wird vermieden, dass die Vorformlinge 1 ungewollt aus dem Horizontalförderer 30 herausgehoben werden.

Die **Figur 10** zeigt schematisch die Übergabe der Vorformlinge 1 vom Horizontalförderer 30 an eine Eintakteineheit 52 vor der Weiterverarbeitungseinheit 63. Die Vorformlinge 1 werden über die Führungsleisten 22 in Transportrichtung 6 zu der Eintakteinheit 52 transportiert. Zwischen dem Horizontalförderer 30 und der Eintakteinheit 52 befindet sich eine antriebslose Strecke 50, auf welcher die Vorformlinge 1 nur über den Staudruck aus dem Horizontalförderer 30 weitertransportiert werden. Die Eintackteinheit 52 übernimmt die Vorformlinge 1 und transportiert sie in Drehrichtung 54 zu der nachgeschalteten Weiterverarbeitungseinheit 63.

Die Erfindung wurde in Bezug auf eine Ausführungsform beschrieben. Es ist für einen Fachmann selbstverständlich, dass Änderungen und Abwandlungen gemacht werden können, ohne dabei den Schutzbereich der nachstehenden Ansprüche zu verlassen.

## Patentansprüche

1. Vorrichtung (9) zum Transport von Vorformlingen (1),
mit mindestens einem Horizontalförderer (30) für die Vorformlinge (1), wobei
der Transport der Vorformlinge (1) über einen vom Horizontalförderer (30) erzeugten Gasstrom (36a, 36b) in eine Weiterverarbeitungsmaschine (63) erfolgt, und
der Horizontalförderer (30) zwei beabstandet gegenüberliegende Führungsleisten (22) zur Führung der Vorformlinge (1) aufweist,
eine horizontale Sortiereinrichtung (20), die dem Horizontalförderer (30) in einer Transportrichtung (6) für die Vorformlinge (1) vorgeschaltet ist und ebenfalls zwei beabstandet gegenüberliegende Führungsleisten (22) zur Führung der Vorformlinge (1), und
**gekennzeichnet durch**
mindestens ein in seiner Position variabel je nach Größe der verwendeten Vorformlinge (1) näher an die Vorformlinge (1) oder weiter von ihnen entfernt einstellbares Sicherungselement (38) zum Verhindern eines ungewollten Austrags von Vorformlingen (1) aus der horizontalen Sortiereinrichtung (20) und/oder aus dem Horizontalförderer (30), wobei das mindestens eine Sicherungselement (38) entlang einer Mittelinie (39) oberhalb der Führungsleisten (22) über der horizontalen Sortiereinrichtung (20) und/oder über dem Horizontalförderer (30) angeordnet ist,
wobei ein Abstand (31a, 31b) zwischen den Führungsleisten (22) horizontal und quer zur Transportrichtung (6) derart veränderlich einstellbar ist,
dass Vorformlinge (1) nach Einstellung eines geringeren Abstands (31a) **durch** die so beabstandeten Führungsleisten (22) der Sortiereinrichtung (20) transportierbar sind, und
Vorformlinge (1) nach Einstellung eines größeren Abstands (31b) aus den so beabstandeten Führungsleisten (22) der Sortiereinrichtung (20) nach unten aussonderbar sind.

2. Vorrichtung (9) nach Anspruch 1, **dadurch gekennzeichnet, dass** unterhalb und/oder oberhalb der Führungsleisten (22) des Horizontalförderers (30) eine Vielzahl von Transportdüsen (34) zum Erzeugen des Gasstromes (36a) zum Transport der Vorformlinge (1) angeordnet sind.

3. Vorrichtung (9) nach Anspruch 2, **dadurch gekennzeichnet, dass** unterhalb und/oder oberhalb der Führungsleisten (22) sich paarweise gegenüberliegende Druckkanäle (32) zur Druckluftversorgung der Transportdüsen (34) zum Erzeugen eines zusätzlichen Gasstromes (36b) befinden.

4. Vorrichtung (9) nach Anspruch 1, **dadurch gekennzeichnet, dass** eine Vielzahl von Transportdüsen (34a) unterhalb der Führungsleisten (22) der horizontalen Sortiereinrichtung (20) zum Erzeugen des Gasstromes (36a) zum Transport der Vorformlinge (1) angeordnet sind.

5. Vorrichtung (9) nach Anspruch 4, **dadurch gekennzeichnet, dass** unterhalb der Führungsleisten (22) sich paarweise gegenüberliegende Druckkanäle (32) zur Druckluftversorgung der Transportdüsen (34a) zum Erzeugen des Gasstromes (36a) angeordnet sind.

6. Vorrichtung (9) nach einem der Ansprüche 1 bis 5, **dadurch gekennzeichnet, dass** der horizontalen Sortiereinrichtung (20) mindestens eine schiefe Ebene (44) zum Zuführen der aussortierten Vorformlinge (1) zu mindestens einer Rückführeinrichtung (40) und/oder mindestens einer Sammeleinrichtung (41) angeordnet ist.

7. Vorrichtung (9) nach Anspruch 1, **dadurch gekennzeichnet, dass** der horizontalen Sortierungseinrichtung (20) in Transportrichtung (6) ein Rollensortierer (10) vorgeordnet ist, wobei der Rollensortierer (10) paarweise angeordnete, gegenläufig angetriebene Rollen (12) zum Ausrichten und Positionieren der Vorformlinge (1) umfasst.

8. Vorrichtung (9) nach Anspruch 7, **dadurch gekennzeichnet, dass** unterhalb der Rollen (12) des Rollensortierers (10) eine Vielzahl von Ausblasdüsen (16) angeordnet sind, mit denen die Vorformlinge (1) aus dem Rollensortierer (10) aussonderbar sind und das die Vorformlinge (1) mindestens einer Rückführeinrichtung (40) und/oder mindestens einer Sammeleinrichtung (41) zuführbar sind.

9. Vorrichtung (9) nach einem der Ansprüche 7 und 8, **dadurch gekennzeichnet, dass** der horizontalen Sortiereinrichtung (20) und dem Rollensortierer (10) je mindestens eine Sensoreinrichtung (19) zugeordnet ist.

## Claims

1. A device (9) for transporting preforms (1), with at least one horizontal conveyor (30) for the preforms (1), wherein
the transport of the preforms (1) is performed via a gas flow (36a, 36b) generated by the horizontal conveyor (30) in a further processing machine (63), and
the horizontal conveyor (30) has two spaced, opposite guide strips (22) for guiding the preforms (1), and
a horizontal sorting unit (20), which is arranged upstream of the horizontal conveyor (30) in a transport direction (6) for the preforms (1) and has likewise two spaced, opposite guide strips (22) for guiding the preforms (1),
**characterized by**
at least one safety element (38), which can be positioned in a variable manner, according to the size of the preforms (1) used, closer to the preforms (1) or at a greater distance therefrom for preventing any unintentional discharge of preforms (1) from the horizontal sorting unit (20) and/or from the horizontal conveyor (30), wherein the at least one safety element (38) is arranged along a centerline (39) above the guide strips (22) and above the horizontal sorting unit (20) and/or the horizontal conveyor (30), wherein a distance (31 a, 31 b) can be variably adjusted horizontally and transversely with respect to the transport direction (6) between the guide strips (22) so that
preforms (1), after setting a lower distance (31 a), can be transported through the so spaced guide strips (22) of the sorting unit (20), and
preforms (1), after setting a greater distance (31b), can be transported downwards out of the so spaced guide strips (22) of the sorting unit (20).

2. The device (9) according to claim 1, **characterized in that** a plurality of transport nozzles (34) are arranged below and/or above the guide strips (22) of the horizontal conveyor (30) for generating the gas flow (36a) for the transport of the preforms (1).

3. The device (9) according to claim 2, **characterized in that** pressure channels (32) are located opposite one another in pairs below and/or above the guide strips (22) for the compressed air supply of the transport nozzles (34) for generating an additional gas flow (36b).

4. The device (9) according to claim 1, **characterized in that** a plurality of transport nozzles (34a) are arranged below the guide strips (22) of the horizontal sorting unit (20) for generating the gas flow (36a) for the transport of the preforms (1).

5. The device (9) according to claim 4, **characterized in that** pressure channels (32) are arranged opposite one another in pairs below the guide strips (22) for the compressed air supply of the transport nozzles (34a) for generating the gas flow (36a).

6. The device (9) according to any one of claims 1 to 5, **characterized in that** the horizontal sorting unit (20) is assigned to at least one inclined plane (44) for supplying the separated preforms (1) to at least one return unit (40) and/or at least one collection unit (41).

7. The device (9) according to claim 1, **characterized in that** a roller sorter (10) is arranged upstream of the horizontal sorting unit (20) in the transport direction (6), wherein the roller sorter (10) comprises antagonistically driven rollers (12) arranged in pairs for aligning and positioning the preforms (1).

8. The device (9) according to claim 7, **characterized in that** a plurality of blowout nozzles (16) with which the preforms (1) can be separated from the roller sorter (10) are arranged below the rollers (12) of the roller sorter (10), and **in that** the preforms (1) can be supplied to at least one return unit (40) and/or at least one collection unit (41).

9. The device (9) according to any one of claims 7 and 8, **characterized in that** the horizontal sorting unit (20) and the roller sorter (10) are assigned each to at least one sensor unit (19).

## Revendications

1. Dispositif (9) pour le transport de préformes (1), avec au moins un convoyeur horizontal (30) pour les préformes (1), étant donné que
le transport des préformes (1) est assuré par un courant de gaz (36a, 36b) généré par le convoyeur horizontal (30) dans une machine de traitement ultérieur (63), et
le convoyeur horizontal (30) présente deux barres de guidage (22) situées l'une en face de l'autre et espacées l'une de l'autre pour le guidage des préformes (1), et
un dispositif de tri horizontal (20) disposé en amont du convoyeur horizontal (30) dans un sens de transport (6) pour les préformes (1) et présentant également deux barres de guidage (22) situées l'une en face de l'autre et espacées l'une de l'autre pour le guidage des préformes (1),
**caractérisé par**
au moins un élément de protection (38) pouvant être disposé en fonction des préformes (1) utilisées à une position variable rapprochée des préformes (1) ou plus éloignée de ces dernières afin d'empêcher toute décharge accidentelle de préformes (1) du dispositif de tri horizontal (20) et/ou du convoyeur horizontal (30), étant donné que le au moins un élément de protection (38) est disposé le long d'une ligne médiane (39) au-dessus des barres de guidage (22) et du dispositif de tri horizontal (20) et/ou au-dessus du convoyeur horizontal (30),
étant donné qu'une distance (31 a, 31 b) peut être ajustée de façon variable entre les barres de guidage (22) horizontalement et transversalement par rapport au sens de transport (6) de manière à ce que
des préformes (1) puissent être transportées, après le réglage d'une distance réduite (31a), à travers les barres de guidage (22) ainsi espacées du dispositif de tri (20), et
des préformes (1) puissent être transportées, après le réglage d'une distance accrue (31 b), vers le bas hors des barres de guidage (22) ainsi espacées du dispositif de tri (20).

2. Dispositif (9) selon la revendication 1, **caractérisé en ce qu'**une pluralité de buses de transport (34) sont disposés au-dessous et/ou au-dessus des barres de guidage (22) du convoyeur horizontal (30) afin de générer le courant de gaz (36a) pour le transport des préformes (1).

3. Dispositif (9) selon la revendication 2, **caractérisé en ce que** se trouvent au-dessous et/ou au-dessus des barres de guidage (22) des canaux de pression (32) situés en paires l'un en face de l'autre pour l'alimentation en air comprimé des buses de transport (34) afin de générer un courant de gaz (36b) supplémentaire.

4. Dispositif (9) selon la revendication 1, **caractérisé en ce qu'**une pluralité de buses de transport (34a) sont disposées au-dessous des barres de guidage (22) du dispositif de tri horizontal (20) afin de générer le courant de gaz (36a) pour le transport des préformes (1).

5. Dispositif (9) selon la revendication 4, **caractérisé en ce que** se trouvent au-dessous des barres de guidage (22) des canaux de pression (32) situés en en paires l'un en face de l'autre pour l'alimentation en air comprimé des buses de transport (34) afin de générer le courant de gaz (36a).

6. Dispositif (9) selon l'une quelconque des revendications 1 à 5, **caractérisé en ce que** sont affectés au dispositif de tri horizontal (20) au moins un plan incliné (44) pour l'amenée des préformes (1) rejetées à au moins une unité de recyclage (40) et/ou au moins une unité de collecte (41).

7. Dispositif (9) selon la revendication 1, **caractérisé en ce qu'**un trieur à rouleaux (10) est disposé en amont du dispositif de tri horizontal (20) dans le sens de transport (6), étant donné que le trieur à rouleaux (10) comprend des rouleaux antagonistes (12) disposés en paires pour l'alignement et le positionnement des préformes (1).

8. Dispositif (9) selon la revendication 7, **caractérisé en ce que** sont disposées au-dessous des rouleaux (12) du trieur à rouleaux (10) une pluralité de buses de purge (16) avec lesquelles les préformes (1) peuvent être déchargées du trieur à rouleaux (10), et **en ce que** les préformes (1) peuvent être alimentées dans au moins une unité de recyclage (40) et/ou au moins une unité de collecte (41).

9. Dispositif (9) selon l'une quelconque des revendications 7 et 8, **caractérisé en ce qu'**au moins un détecteur (19) est chaque fois affecté au dispositif de tri horizontal (20) et au trieur à rouleaux (10).
